# EUROPÄISCHE PATENTANMELDUNG

(11) **EP 1 435 302 A1**
(43) Veröffentlichungstag der Anmeldung: **07.07.2004**
(21) Anmeldenummer: 03024220.0
(22) Anmeldetag: 22.10.2003
(51) Int. Cl.: B60C 23/00

(54) **Reifendruck-Regeleinrichtung**

(30) Priorität: 01.01.2003 DE 10300183; 30.05.2003 DE 10324720
(71) Anmelder: WABCO GmbH & CO. OHG, 30453 Hannover (DE)
(72) Erfinder: Bodet, Marc, 30989 Northen (DE); Deguille, Laurent, 77169 Chauffry (FR)
(74) Vertreter: Schrödter, Manfred

(57) **Zusammenfassung**

Die Erfindung betrifft eine Reifendruck-Regeleinrichtung, insbesondere für Fahrzeuge, mit einer einen Kompressor und einen Druckluftspeicher aufweisenden Luftversorgungseinrichtung, mit einer wenigstens einen Reifen, ein Achsventil und Reifenventil aufweisenden Reifenanlage, die druckmäßig mit der Luftversorgungseinrichtung in Verbindung steht, und mit einer elektronischen Steuereinrichtung zur Steuerung von Ventilen zur Belüftung (Druckerhöhung) und Entlüftung (Druckabsenkung) von Reifen. Zur Erzielung einer geräuscharmen Arbeitsweise und eines geringen Energiebedarfs, ist vorgesehen, dass zur Erhöhung des Luftdrucks in wenigstens einem Reifen (104) Druckluft aus dem Druckluftspeicher (23) ohne Kompressorunterstützung oder über den Kompressor (14) hochkomprimiert in den Reifen einspeisbar ist und zur Verringerung des Luftdrucks im Reifen Druckluft aus dem Reifen (104) ohne Kompressorunterstützung oder über den Kompressor (14) in den Druckluftspeicher (23) einspeisbar ist zum Aufladen des Druckspeichers auf den aus dem Reifen ausgesteuerten Druck oder auf einen vom Kompressor hochkomprimierten vorgebbaren Druck.

## Beschreibung

Die Erfindung betrifft eine Reifendruck-Regeleinrichtung gemäß Oberbegriff des Anspruchs 1.

Es sind Reifendruck-Regeleinrichtungen bekannt, bei denen die Belüftung der Reifen über einen Kompressor oder einen Kompressor in Verbindung mit einem Druckluftspeicher und die Entlüftung der Reifen über ein Ventil zur Atmosphäre hin erfolgt. Nachteilig ist, dass Kompressoren relativ großer Leistung notwendig sind, wodurch sich ein relativ hoher Energieverbrauch ergibt. Ein evtl. eingesetzter Lufttrockner erfordert ein relativ großes Bauvolumen. Das Entlüften der Reifen zur Atmosphäre hin bedeutet einen relativ hohen Energieverlust, wobei zudem die Abgabe an die Atmosphäre mit Geräuschen verbunden ist.

Aus der DE 199 59 556 C1 ist eine geschlossene Niveauregeleinrichtung in Form einer Luftfederungsanlage für Fahrzeuge mit Druckmittelkammern bekannt, durch die ein Fahrzeugaufbau gegenüber mindestens einer Fahrzeugachse abgefedert ist. Die Niveauregeleinrichtung umfasst einen Druckmittelvorratsbehälter, der mit den Druckmittelkammern in Wirkverbindung steht, derart, dass Druckmittel aus dem Druckmittelvorratsbehälter in die Druckmittelkammer oder Druckmittel aus der Druckmittelkammer in den Druckmittelvorratsbehälter überführbar ist. Eine Pumpe fördert Druckmittel aus dem Druckmittelvorratsbehälter in jede Druckmittelkammer oder aus jeder Druckmittelkammer in den Druckmittelvorratsbehälter. Die Pumpe weist einen Eingang und einen Ausgang auf und ist derart ausgebildet, dass sie Druckmittel zumindest vom Eingang zum Ausgang befördern kann. Eine von dem Druckmittelvorratsbehälter ausgehende Druckmittelleitung ist über ein steuerbares Wegeventil mit dem Eingang und eine von der Druckmittelkammer ausgehende Druckmittelleitung ist über ein steuerbares Wegeventil mit dem Ausgang der Pumpe zumindest dann verbunden, wenn Druckmittel aus dem Druckmittelvorratsbehälter mittels der Pumpe in die Druckmittelkammer überführt werden soll. Eine von der Druckmittelkammer ausgehende Druckmittelleitung ist über ein steuerbares Wegeventil mit dem Eingang und eine von dem Druckmittelvorratsbehälter ausgehende Druckmittelleitung über ein steuerbares Wegeventil mit dem Ausgang der Pumpe zumindest dann verbunden, wenn Druckmittel aus der Druckmittelkammer mittels der Pumpe in den Druckmittelvorratsbehälter überführt werden soll. Der Grundgedanke dieser bekannten Niveauregelanlage ist darin zu sehen, dass, wenn Druckmittel aus dem Druckmittelvorratsbehälter in eine Druckmittelkammer gefördert werden soll, der Eingang der Pumpe mit dem Druckmittelvorratsbehälter und der Ausgang der Pumpe mit der Druckmittelkammer verbunden ist. Soll hingegen Druckluft aus einer Druckmittelkammer in den Druckmittelvorratsbehälter gefördert werden, wird der Eingang der Pumpe mit der Druckmittelkammer und der Ausgang der Pumpe mit dem Druckmittelvorratsbehälter verbunden.

Durch die DE 33 46 911 A1 ist eine geschlossene Luftfederungsanlage für Kraftfahrzeuge bekannt, bei der eine Pumpe samt Antriebsmotor sowie eine Niveauregeleinrichtung in einem Vorratsbehälter angeordnet sind. Die Pumpe ist als vor- und zurücklaufende Druckpumpe ausgebildet. Die eine Förderrichtung der Pumpe führt vom Vorratsbehälter zu der Niveauregeleinrichtung und die andere Förderrichtung von der Niveauregeleinrichtung zum Vorratsbehälter. Der Abstand des Wagenkastens des Fahrzeugs von seiner Fahrzeugachse wird mit Hilfe von Niveauschaltern überwacht. Wenn sich der Abstand ändert, werden über eine Auswerteeinrichtung Magnetventile und die Pumpe gesteuert entweder zum Belüften oder Entlüften. D. h. im Betrieb wird die unter Vordruck gespeicherte Luft im Vorratsbehälter zwischen den Federbälgen und dem Vorratsbehälter hin- und hergefördert.

Die Aufgabe der vorliegenden Erfindung besteht darin, eine Reifendruck-Regeleinrichtung der eingangs genannten Art so auszubilden, dass sie geräuscharm arbeitet und einen geringen Energiebedarf benötigt.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schlägt die Verwendung eines Druckluftspeichers vor, wobei im Normalbetrieb Luft zum Belüften der Reifen aus dem Speicher in die Reifen und beim Entlüften der Reifen aus den Reifen in den Druckluftspeicher gefördert wird, so dass keine Verbindung mehr zur Atmosphäre vorliegt. Hierdurch ergibt sich eine geringere Geräuschentwicklung, da Luft nicht mehr an die Atmosphäre abgegeben wird. Es kann ein Kompressor mit relativ geringer Leistung und geringer Baugröße eingesetzt werden, da bei einem erforderlichen Belüften der Reifen lediglich eine dem Differenzdruck zwischen Speicherdruck und erforderlichem Reifendruck entsprechende geringere Leistung aufzubringen ist. Die erfindungsgemäße Reifendruck-Regeleinrichtung stellt für den Normalbetrieb ein geschlossenes System dar. Die Regeleinrichtung kompensiert aber auch Minderdruck- und Überdruckzustände im System an sich und Ausfälle von Teilen des Systems, wie des Kompressors und des Speichers.

Die Erfindung soll nachfolgend anhand der beigefügten Zeichnung, in der Ausführungsbeispiele dargestellt sind, näher erläutert werden.

Es zeigen:
- Fig. 1: schematisch ein Übersichtsschaltbild der erfindungsgemäßen Reifendruck-Regeleinrichtung,
- Fig. 2: ein Gesamtschaltbild der Reifendruck-Regeleinrichtung mit einer ersten Ausführungsform einer Luftversorgungseinheit für eine Reifenanlage,
- Fig. 3, 4, 5: Schaltbilder von weiteren Ausführungsformen der Luftversorgungseinheit für die Reifenanlage,
- Fig. 6: ein Schaltbild einer Reifenanlage und
- Fig. 7: eine genauere schematische Darstellung der Reifenanlage nach Fig. 6.

Gleiche und einander entsprechende Bauteile in den Figuren der Zeichnung sind mit den gleichen Bezugszeichen versehen.

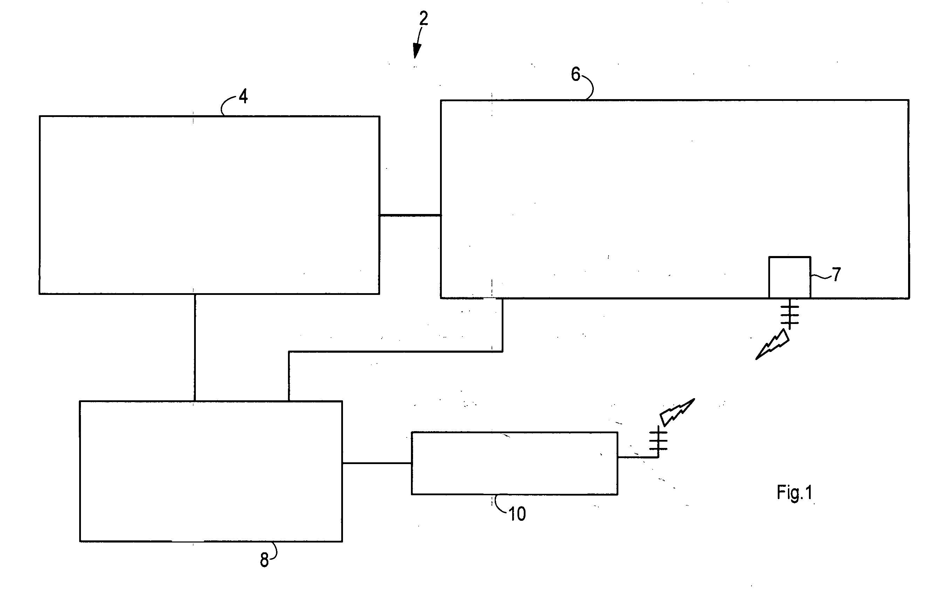

Fig. 1 zeigt ein Übersichtsschaltbild einer Reifendruck-Regeleinrichtung 2 mit einer Druckluftversorgungseinheit 4, einer druckmäßig mit der Druckluftversorgungseinheit 4 kommunizierenden Reifenanlage 6 und einer zentralen elektronischen Steuereinheit 8, die die Druckluftversorgungseinheit 4 und Reifenanlage 6 steuert in Abhängigkeit von in der Reifenanlage 6 mittels Druck- und Temperatursensoren gemessenen Druck- und Temperaturmessdaten, die per Funk von einer Sendeeinrichtung 7 der Reifenanlage auf eine Empfangseinrichtung 10 der Steuereinheit 8 übertragen werden.

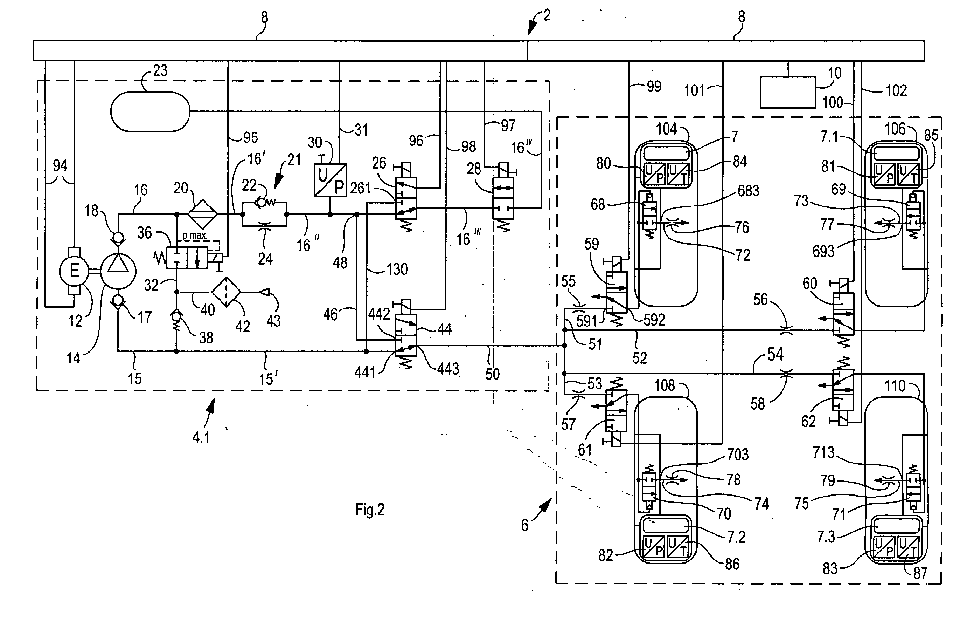

Die Fig. 2 zeigt ein detailliertes Gesamtschaltbild der Reifendruck-Regeleinrichtung 2 mit einer ersten Ausführungsform der Luftversorgungseinheit 4.1, die einen durch einen Motor 12 antreibbaren Kompressor 14 umfasst. Auf der Ansaugseite und der Druckseite des Kompressors sind in einer Ansaugleitung 15 und einer Druckleitung 16 je ein Rückschlagventil 17 und 18 angeordnet, die einen Rückfluss verhindern und die Strömungsrichtung festlegen.

In der Druckleitung 16 ist ein dem Kompressor 14 nachgeschalteter Lufttrockner 20 angeordnet, von dem ein Leitungsabschnitt 16' zu einer ein Drosselrückschlagventil bildende Parallelschaltung 21 aus einem Rückschlagventil 22 mit Federgegendruck und einer Drossel 24 führt. Ein weiterer Leitungsabschnitt 16" verbindet die Parallelschaltung 21 mit einem elektromagnetisch betätigbaren 3/2-Wegeventil 26, von dem ein Leitungsabschnitt 16''' zu einem elektromagnetisch betätigbaren 2/2-Wegeventil 28 führt, das über eine Leitung 16^{IV} mit einem Druckspeicher 23 verbunden ist. Ein Drucksensor 30, von dem eine elektrische Leitung 31 zu der elektronischen Steuereinheit 8 führt, ist an den Leitungsabschnitt 16'' angeschlossen.

Der Kompressor 14 ist durch ein Überbrückungsleitung 32 überbrückt, die die Druckleitung 16 mit der Ansaugleitung 15 verbindet und in der ein elektromagnetisch betätigbares 2/2-Wegeventil 36 und ein Rückschlagventil 38 mit Federgegendruck angeordnet sind. Über das Rückschlagventil 38 ist die Ansaugleitung 15 mit einer Zuleitung 40, in der ein Filter 42 angeordnet ist, verbunden. Über die Zuleitung 40 kann Atmosphärenluft über einen Luftansauganschluss 43 angesaugt werden. Das Rückschlagventil 38 verhindert eine Luftströmung durch die Zuleitung 40 in die Atmosphäre. Die Ventile 28 und 36 befinden sind in der geschlossenen Schaltstellung gezeigt.

Die Ansaugleitung 15 ist über einen Leitungsabschnitt 15' mit einem Druckluftanschluss 441 eines elektrisch betätigbaren 3/2-Wegeventils 44 verbunden, dessen Druckluftanschluss 442 über eine Leitung 46 mit einer zwischen der Parallelschaltung 21 und dem 3/2-Wegeventil 26 gelegenen Stelle 48 des Leitungsabschnitts 16'' verbunden ist. Vom Druckluftanschluss 443 des 3/2-Wegeventils 44 führt eine Leitung 50 zu der Reifenanlage 6. Die Leitung 50 verzweigt in zu Reifen 104, 106, 108, 110 führende Leitungen 51, 52, 53, 54.

Die Leitungen 51, 52, 53, 54 führen über Drosseln 55, 56, 57, 58 zu elektromagnetisch betätigbaren 3/2-Wege-Achsventilen 59, 60, 61, 62, die die Leitungen 51, 52, 53, 54 über Rotationsdichtungen (in der Fig. 2 nicht dargestellt) mit pneumatisch betätigten 2/2-Wege-Reifenventilen 68, 69, 70, 71, verbinden, von deren reifenseitigen Anschlüssen 683, 693, 703 und 713 Leitungen 72, 73, 74 und 75 über Drosseln 76, 77, 78 und 79 in das Reifeninnere führen.

Die Reifen sind mit Drucksensoren 80, 81, 82, 83 und Temperatursensoren 84, 85, 86, 87 und Sendeeinrichtungen 7, 7.1, 7.2 und 7.3 versehen, die die Druck- und Temperaturmessdaten an die Empfangseinrichtung 10 der elektronischen Steuereinheit 8 senden.

Die 2/2-Wege-Reifenventile, die Druck- und Temperatursensoren sowie die Sendeeinrichtungen rotieren mit den Reifen.

Die elektronische Steuereinheit 8 ist über Steuerleitungen 94, 95, 96, 97, 98, 99, 100, 101, 102 mit dem Motor 12 des Kompressors 14 und den Wegeventilen 36, 26, 28, 44 und 59-62 verbunden.

Die Ansaugleitung 15 ist über einen Leitungsabschnitt 15' und eine Verbindungsleitung 130 mit dem Druckluftanschluss 261 des 3/2-Wegeventiles 26 verbunden.

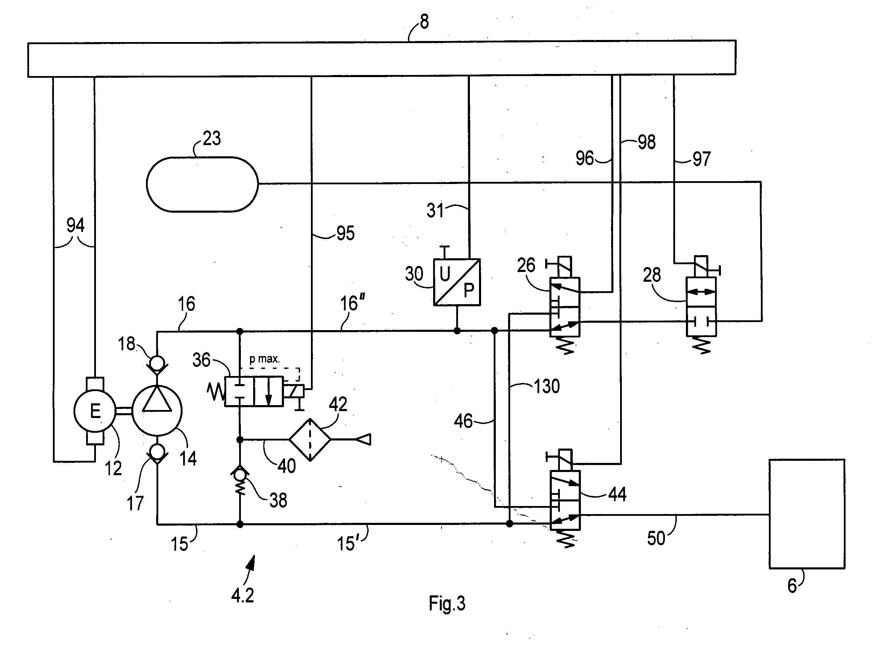

Die Fig. 3 zeigt ein Schaltbild einer zweiten Ausführungsform einer Luftversorgungseinheit 4.2, die sich von der Ausführungsform 4.1 nach Fig. 2 nur dadurch unterscheidet, dass der Lufttrockner 20 fehlt.

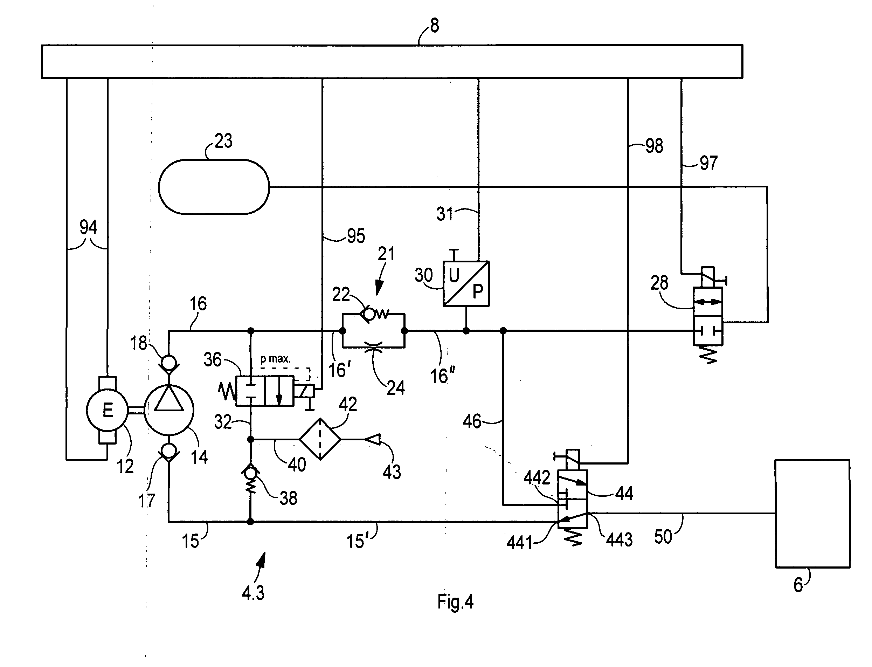

Die Fig. 4 zeigt ein Schaltbild einer dritten Ausführungsform einer Luftversorgungseinheit 4.3, die sich von der Ausführungsform 4.1 nach Fig. 2 dadurch unterscheidet, dass das 3/2-Wegeventil 26 und die Leitung 130 fehlen.

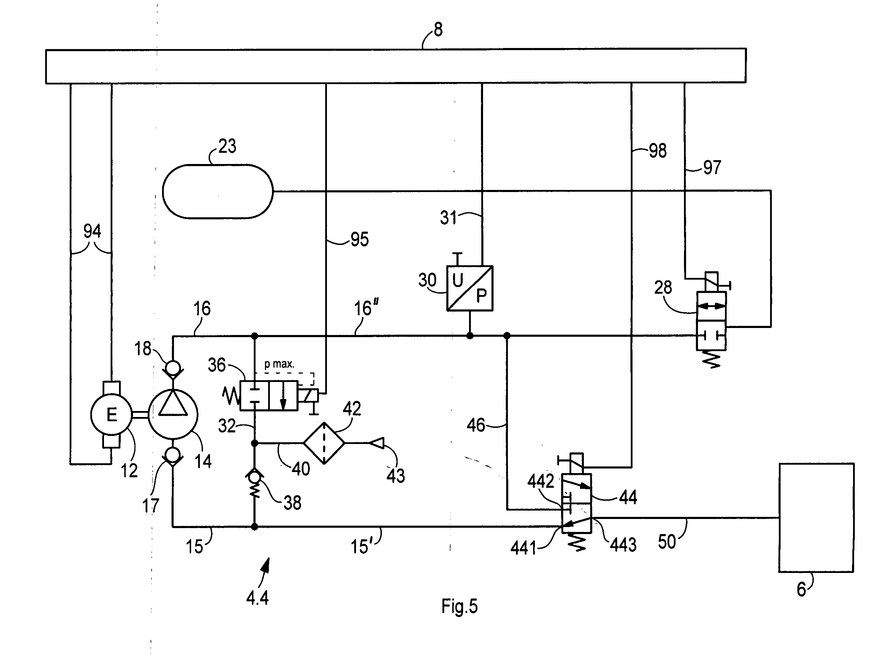

Die Fig. 5 zeigt das Schaltbild einer vierten Ausführungsform einer Luftversorgungseinheit 4.4, die sich von der Luftversorgungseinheit 4.3 nach Fig. 4 dadurch unterscheidet, dass der Lufttrockner 20 entfällt.

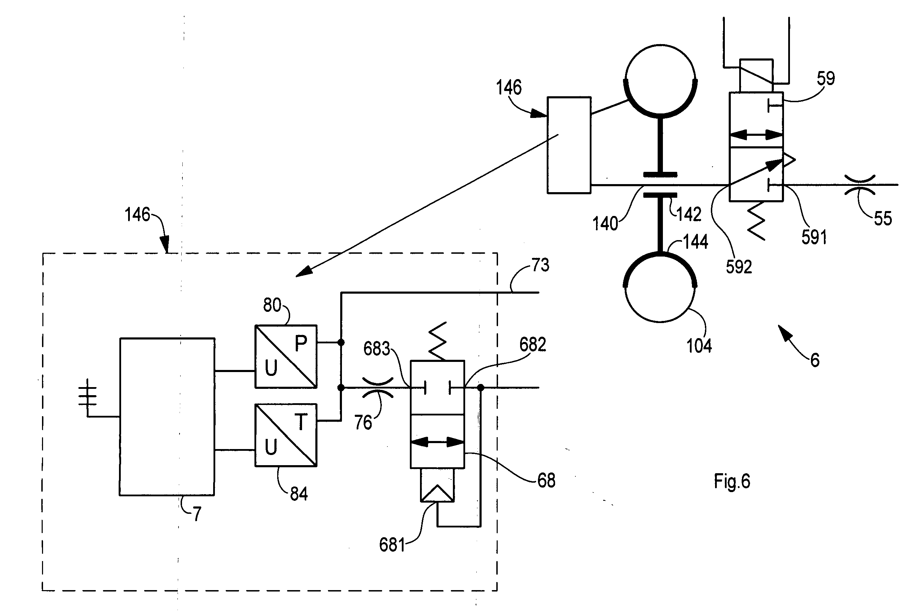

Die Fig. 6 zeigt schematisch den Aufbau der Reifenanlage 6 für einen Reifen, beispielsweise Reifen 104, mit dem 3/2-Wege-Achsventil 59, der diesem Ventil vorgeschalteten Drossel 55, einer Leitungsdurchführung 140 durch die Achse 142 der Felge 144, und einer reifeninneren Einheit 146, die das 2/2-Wege-Reifenventil 68 mit Drossel 76, den Drucksensor 80, den Temperatursensor 84 und die Sendeeinrichtung 7 umfasst und sich mit dem Reifen 104 mitdreht.

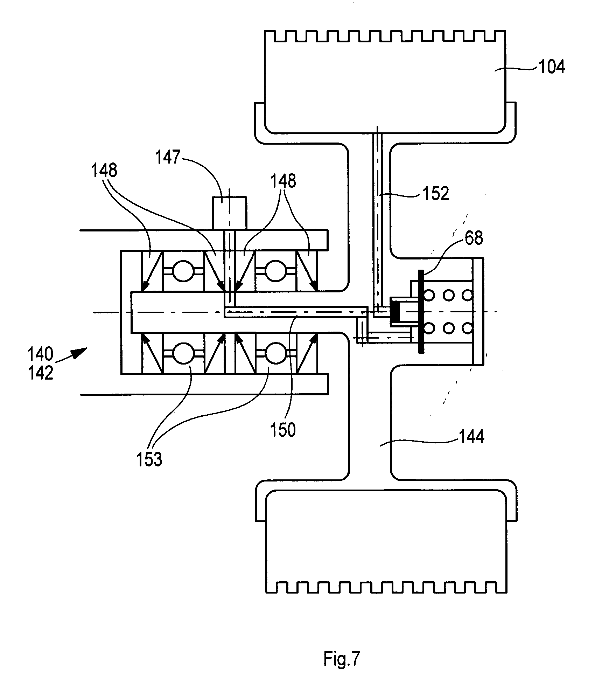

Die Fig. 7 zeigt schematisch Teile der Reifenanlage 6 detaillierter. In der Versorgungsleitung sind vor dem Reifen 104 vier Rotationsdichtungen 148 und zwischen dieser und dem Reifen 104 das pneumatisch betätigte 2/2-Wege-Radventil 68 angeordnet. Bei Betätigung des Achsventils 59 strömt bei einem Belüftungsvorgang zunächst Druckluft über einen Druckluftanschluss 147 durch die Rotationsdichtungen 148 und über eine Leitung 150 dem Radventil 68 zu und bei entsprechender Stellung des Radventils in den Reifen über eine Leitung 152. Mit dem Bezugszeichen 153 sind Kugellager bezeichnet.

Ist nach dem Befüllen der Soll-Reifendruck erreicht, wird das Achsventil 59 in die in der Fig. 2 gezeigte Normalstellung gebracht und der evtl. noch laufende Kompressor 12 und das 3/2-Wegeventil 44 werden stromlos geschaltet, so dass das Ventil 44 in die gezeigte Schaltstellung geht. Hierdurch fällt der Druck in der Versorgungsleitung zum 2/2-Wege-Reifenventil 68 schlagartig ab, welches dadurch in den Sperrzustand schaltet.

Zum Entlüften des Reifens 104 wird zunächst das pneumatisch gesteuerte Reifenventil 68 aufgesteuert, indem das Achsventil 59 auf Durchlass geschaltet wird, so dass Druckluft über das Reifenventil 68, das Achsventil 59, das 3/2-Wegeventil 44, den Kompressor 12, das Rückschlagventil 22 und die Ventile 26 und 28 in den Druckspeicher 23 gelangt. Nach dem Entlüften werden die Ventile wieder in die dargestellten Schaltstellungen geschaltet.

Nachfolgend soll die Arbeitsweise der Reifendruck-Regeleinrichtung 2 anhand der verschiedenen Ausführungsformen nach den Fig. 2-5 näher beschrieben werden, wobei angenommen sei ,dass die Reifen 104, 106, 108, 110 und der Druckluftspeicher 23 befüllt sind. Im Betrieb, d. h. nach der erstmaligen Befüllung des Druckspeichers und der Reifen können Minderdruck- und Überdruckzustände im System oder Teilen des Systems auftreten, was bspw. vor Antritt einer Fahrt oder bei einem Halt überprüfbar ist oder automatisch durch die elektronische Steuereinheit 8 anhand der Messsignale der Druck-Sensoren erkannt wird.

Wird ein Minderdruckzustand erkannt, schaltet die Steuereinrichtung 8 die Regeleinrichtung 2 automatisch in den Betriebszustand "Belüftungsbetrieb". Wird ein Überdruckzustand erkannt wird in den "Entlüftungsbetrieb" geschaltet. Zum Regenerieren des Lufttrockners 20 schaltet die Steuereinrichtung in den "Regenerationsbetrieb". Außerdem ist eine "Sicherheitsfunktion" vorgesehen für den Fall, dass Teile der Regeleinrichtung ausfallen.

Das Belüften (Druck erhöhen) und Entlüften (Druck absenken) der Reifen soll zur Vereinfachung nur für einen Reifen, hier den Reifen 104 erläutert werden. Das Belüften und Entlüften weiterer Reifen erfolgt analog.

### 1. Arbeitsweise der Reifendruckregeleinrichtung anhand der Ausführungsform nach Fig. 2.

### 1.1 Belüftungsbetrieb

### 1.1.1 Normalbetrieb

Die Steuereinrichtung 8 schaltet den Kompressor 14 ein und schaltet die 3/2-Wegeventile 26 und 44 und das 2/2-Wegeventil 28 aus den in der Fig. 2 dargestellten ersten Schaltzuständen in deren zweite Schaltzustände, so dass der Druckluftspeicher 23 über die Ventile 28 und 26, die Leitung 130, den Leitungsabschnitt 15', die Ansaugleitung 15, den Kompressor 14, die Druckleitung 16, den Lufttrockner 20, das Rückschlagventil 22 und die Leitung 46 mit dem Druckluftanschluss 442 des 3/2-Wegeventils 44 verbunden ist. Über das Wegeventil 44 erfolgt dann über den Druckluftanschluss 443, die Leitung 50 und die Drossel 55 das Belüften des Reifens 104, indem das Achsventil 59 aus der in der Fig. 2 gezeigten Schaltstellung durch die Steuereinrichtung 8 umgeschaltet wird, so dass der vom Kompressor 14 hochkomprimierte Vordruck des Luftspeichers 23 über die Druckluftanschlüsse 591 und 592 des Achsventils 59 den Steueranschluss 681 des Reifenventils 68 beaufschlagt, wodurch dieser auf Durchlass schaltet, so dass Druckluft über die Druckluftanschlüsse 682 und 683 des Reifenventils, die Drossel 76 und die Leitung 73 in den Reifen gefördert wird.

Sobald der Reifen-Solldruck erreicht ist, der vom Drucksensor 80 überwacht wird und über die Sendeeinrichtung 87 der Empfangseinrichtung 10 der Steuereinrichtung 8 mitgeteilt wird, schaltet die Steuereinrichtung 8 die Ventile 26, 28, 44 und 59 wieder in die in Fig. 2 gezeigte Ausgangsstellung um. Durch den hierdurch bewirkten Druckabfall am Steueranschluss 681 des Reifenventils 68 wird das Reifenventil 68 in den Sperrzustand geschaltet.

### 1.1.2 Normalbetrieb ohne Kompressor

Ein Befüllen ist auch möglich ohne den Kompressor, wenn der Speicher 23 einen höheren Druck aufweist als der Reifen. Hierzu werden die Ventile 28 und 44 aus der in der Zeichnung gezeigten Ausgangsstellung umgeschaltet. Druckluft aus dem Speicher kann dann über die Ventile 28, 26 und 44 in die Reifenanlage 6 strömen.

### 1.1.3 Normalbetrieb mit Atmosphärenluftansaugung

Falls auf den Druck des Druckspeichers 23 nicht zugegriffen werden kann, ist ein Belüften mit Hilfe der Atmosphärenluft möglich. Hierzu schaltet die Steuereinrichtung 8 den Kompressor 14 ein und schaltet das Ventil 44 um. Der Kompressor saugt über die Zuleitung 40 und die Ansaugleitung 15 Atmosphärenluft an und fördert die hochkomprimierte Atmosphärenluft über den Trockner 20, das Rückschlagventil 22, die Verbindungsleitung 46 und das Ventil 44 in die Reifenanlage 6. Das Befüllen bzw. Belüften des Reifens 104 erfolgt analog wie oben unter 1.1.1 beschrieben.

Wenn zusätzlich noch das Ventil 28 umgeschaltet wird, kann gleichzeitig der Speicher 23 belüftet werden, dessen Druck durch den Drucksensor 30 überwacht wird. Bei Erreichen des vorgesehenen Druckes schaltet die elektronische Steuereinrichtung 8 das Ventil wieder in den Sperrzustand.

### 1.1.4 Speicherbelüftung

Falls nur der Speicher 23 Minderdruck aufweist, was über den Drucksensor 30 erfasst wird, kann ein Befüllen des Speichers mit komprimierter Atmosphärenluft durch Einschalten des Kompressors 14 und Umschalten des Ventils 28 erfolgen.

### 1.1.5 Sonderbetrieb

Ein Befüllen ist auch möglich ohne den Kompressor, wenn der Speicher 23 einen höheren Druck aufweist als der Reifen. Hierzu werden die Ventile 28, 26 und 44 aus der in der Zeichnung gezeigten Ausgangsstellung umgesteuert. Druckluft aus dem Speicher kann dann über die Ventile 28 und 26, die Leitung 130, die in Strömungsrichtung automatisch öffnenden Rückschlagventile 17 und 18 vor und hinter dem Kompressor, ohne dass der Kompressor eingeschaltet werden muss, und das Ventil 44 in die Reifenanlage 6 strömen.

### 1.2 Entlüftungsbetrieb

### 1.2.1 Normalbetrieb

Die Steuereinheit 8 schaltet bei z. B. zu hohen Druck im Reifen den Kompressor 14 ein. Die Ventile 26 und 44 werden nicht umgesteuert, sie verbleiben in dem in Fig. 2 gezeigten Schaltzustand. Das Ventil 28 wird auf Durchlass geschaltet, so dass die Reifenanlage 6 über das Ventil 44 mit dem saugseitigen Anschluss des Kompressors 14 verbunden wird. Der Kompressor 12 fördert Luft aus dem Reifen über den Lufttrockner 20, das Rückschlagventil 22 und die Ventile 26 und 28 in den Druckluftspeicher 23. Wenn der Reifensolldruck erreicht ist, wird durch Umschalten des Achsventils 59 der Steuerdruck am Reifenventil 68 abgesenkt, wodurch das Reifenventil schließt.

### 1.2.2 Entlüftung in die Atmosphäre

Falls der Druck im Speicher 23 höher als der maximale erlaubte Druck ist, kann eine Entlüftung des Reifens in den Speicher nicht erfolgen. In diesem Fall wird der Kompressor 14 eingeschaltet und werden die Ventile 36 und 28 oder nur das Ventil 36 umgeschaltet. Über das offene Ventil 36 erfolgt dann die Entlüftung des Reifens in die Atmosphäre über die Zuleitung 40 und den Anschluss 43.

### 1.3 Sicherheitsfunktion

Falls Probleme mit dem Kompressor 14 auftreten, kann das Ventil 36 auf Durchlass geschaltet werden, so dass eine Druckabsenkung, d. h. Entlüftung des Reifens 104 über das Ventil 36 zur Atmosphäre hin erfolgt.

### 1.4 Regenerationsbetrieb.

Zum Regenieren des Lufttrockners 20 werden die Ventile 36 und 28 umgeschaltet, so dass Luft aus dem Speicher 23 über die Ventile 28 und 26 und die Drossel 24 des Drosselrückschlagventils 21 durch den Lufttrockner 20 und dann über das Ventil 36 und die Zuleitung 40, den Filter 42 und den Anschluss 43 in die Atmosphäre strömt. Durch das Entspannen der Druckluft infolge der Drosselwirkung wird eine bessere Regenerationswirkung des im Lufttrockners befindlichen Trockenmittels erreicht, d.h. es wird mit relativ wenig Druckluftverbrauch eine relativ hohe Trocknungswirkung erzielt.

### 2. Arbeitsweise der Luftversorgungseinrichtung 4.2 der Reifendruck-Regelungseinrichtung gemäß Ausführungsform nach Fig. 3.

Da diese Ausführungsform sich von der nach Fig. 2 nur durch das Fehlen des Lufttrockners 20 unterscheidet, erfolgen das Befüllen, Entlüften und die Sicherheitsfunktion wie bei der Ausführungsform nach Fig. 2.

### 3. Arbeitsweise der Luftversorgungseinrichtung 4.3 der Reifendruck-Regelungseinrichtung gemäß Ausführungsform nach Fig. 4.

Diese Ausführungsform unterscheidet sich von der nach Fig. 2 dadurch, dass das 3/2-Wegeventil 26 und die Leitung 130 fehlen.

### 3.1 Befüllvorgang

### 3.1.1 Normalbetrieb ohne Kompressor

Die Steuereinrichtung 8 schaltet den Kompressor 14 nicht an, schaltet jedoch das Magnetventil 44 und 28 um, so dass der Druckspeicher 23 über das auf Durchlass geschaltete Ventil 28 und die Leitung 46 mit dem Druckluftanschluss 442 des Ventils 44 verbunden wird. Über das Ventil 44 erfolgt dann die Belüftung des Reifens analog wie oben anhand der Fig. 2 beschrieben, wobei hier allerdings vorausgesetzt wird, dass der Druck im Speicher 23 höher als der Druck im zu befüllenden Reifen ist.

### 3.1.2 Normalbetrieb mit Atmosphärenansaugung

Falls auf den Druck des Druckspeichers 23 nicht zugegriffen werden kann, ist ein Belüften mit Hilfe der Atmosphärenluft möglich. Hierzu schaltet die Steuereinrichtung 8 den Kompressor 14 ein und schaltet das Ventil 44 um. Der Kompressor saugt über die Zuleitung 40 und die Ansaugleitung 15 Atmosphärenluft an und fördert die komprimierte Atmosphärenluft über den Trockner 20, das Rückschlagventil 22, die Verbindungsleitung 46 und das Ventil 44 in die Reifenanlage 6. Das Befüllen bzw. Belüften des Reifens 104 erfolgt analog wie oben unter 1.1.1 beschrieben.

### 3.1.3 Befüllung von Speicher und Reifen

Wenn zusätzlich zu dem Fall nach 3.1.2 noch das Ventil 28 umgeschaltet wird, kann gleichzeitig der Speicher 23 belüftet werden, dessen Druck durch den Drucksensor 30 überwacht wird. Bei Erreichen des vorgesehenen Druckes schaltet die elektronische Steuereinrichtung 8 das Ventil wieder in den Sperrzustand.

### 3.1.4 Speicherbefüllung

Falls nur der Speicher 23 Minderdruck aufweist, was über den Drucksensor 30 erfasst wird, kann ein Befüllen mit komprimierter Atmosphärenluft durch Einschalten des Kompressors 14 und Umschalten des Ventils 28 erfolgen.

### 3.2 Entlüftungsvorgang

### 3.2.1 Normalbetrieb

Die Steuereinheit 8 schaltet bei z. B. zu hohen Druck im Reifen den Kompressor 14 ein. Das Ventil 28 wird auf Durchlass geschaltet. Das Ventil 44 wird nicht umgesteuert, sondern verbleibt in dem in Fig.4 gezeigten Schaltzustand, so dass die Reifenanlage 6 über das Ventil 44 mit dem saugseitigen Anschluss des Kompressors 14 verbunden wird. Der Kompressor 14 fördert Luft aus dem Reifen über den Lufttrockner 20, das Rückschlagventil 22 und das Ventil 28 in den Druckluftspeicher 23. Wenn der Reifensolldruck erreicht ist, wird durch Umschalten des Achsventils 59 der Steuerdruck am Reifenventil 68 abgesenkt, wodurch das Reifenventil schließt.

### 3.2.2 Entlüftung in die Atmosphäre

Falls der Druck im Speicher 23 höher als der maximale erlaubte Druck ist, kann eine Entlüftung des Reifens in den Speicher nicht erfolgen. In diesem Fall wird der Kompressor 14 eingeschaltet und werden die Ventile 36 und 28 oder nur das Ventil 36 umgeschaltet. Über das offene Ventil 36 erfolgt dann die Entlüftung des Reifens in die Atmosphäre über die Zuleitung 40 und den Anschluss 43.

### 3.3 Sicherheitsfunktion

Falls Probleme mit dem Kompressor 14 auftreten, kann das Ventil 36 auf Durchlass geschaltet werden, so dass eine Druckabsenkung, d. h. Entlüftung des Reifens 104 über das Ventil 36 zur Atmosphäre hin erfolgt.

### 3.4 Regenerationsbetrieb

Zum Regenerieren des Lufttrockners 20 werden die Ventile 36 und 28 umgeschaltet, so dass Luft aus dem Speicher 23 über das Ventil 28 und die Drossel 24 durch den Lufttrockner 20 und dann über das Ventil 36 und die Zuleitung 40, den Filter 42 und den Anschluss 43 in die Atmosphäre strömt. Ergänzend soll auf die Erläuterung unter 1.4 verwiesen werden.

### 4. Arbeitsweise der Luftversorgungseinrichtung 4.4 der Reifendruck-Regelungseinrichtung gemäß Ausführungsform nach Fig. 5.

Da diese Ausführungsform sich von der nach Fig. 4 nur durch das Fehlen des Lufttrockners 20 unterscheidet, erfolgen das Befüllen, Entlüften und die Sicherheitsfunktion wie bei der Ausführungsform nach Fig. 4.

Das Befüllen von Reifen aufgrund von Minderdruck-Zuständen, z. B. infolge von Undichtigkeiten an Teilen der Reifenanlage oder auch durch einen Betrieb der Reifendruck-Regeleinrichtung 2 unter geänderten klimatischen Gegebenheiten, d. h. bei geringeren Umgebungstemperaturen. So ist es beispielsweise notwendig, einen bei hohen Umgebungstemperaturen auf einen erwünschten Solldruck aufgefüllten Reifen mit Druckluft nachzubefüllen, wenn das mit'der Luftdruck-Regelungseinrichtung ausgestattete Fahrzeug in einer Region mit geringeren Umgebungstemperaturen betrieben wird.

Die elektronische Steuereinheit 8 erkennt einen Minderdruckzustand automatisch durch regelmäßige Auswertung der Signale der Druck- und Temperatursensoren der Reifenanlage.

Im umgekehrten Fall kann es bei einem Fahrzeug, das zunächst in einer kälteren klimatischen Region betrieben wird, bei einem Betrieb in einer wärmeren klimatischen Region vorkommen, dass durch die höhere Temperatur der Reifendruck über den Solldruck ansteigt. Auch dies wird über die Druck- und Temperatursensoren der Reifenanlage erkannt und der Steuereinrichtung mitgeteilt, die dann ein Absenken des Reifendruckes bewirkt. Beim Entlüften des Reifens wird der Reifen, wie oben beschrieben, mit dem Druckluftspeicher über den Kompressor verbunden. Hierbei kann die Druckluft nicht über die Ansaugleitung und die Zuleitung 40 zur Atmosphäre hin entweichen, da dies durch das Rückschlagventil 38 verhindert wird.

## Patentansprüche

1. Reifendruck-Regeleinrichtung, insbesondere für Fahrzeuge, mit einer einen Kompressor und einen Druckluftspeicher aufweisenden Luftversorgungseinrichtung, mit einer wenigstens einen Reifen, ein Achsventil und Reifenventil aufweisenden Reifenanlage, die druckmäßig mit der Luftversorgungseinrichtung in Verbindung steht, und mit einer elektronischen Steuereinrichtung zur Steuerung von Ventilen zur Belüftung (Druckerhöhung) und Entlüftung (Druckabsenkung) von Reifen, **dadurch gekennzeichnet, dass** zur Erhöhung des Luftdrucks in wenigstens einem Reifen (104) Druckluft aus dem Druckluftspeicher (23) ohne Kompressorunterstützung oder über den Kompressor (14) hochkomprimiert in den Reifen einspeisbar ist und zur Verringerung des Luftdrucks im Reifen Druckluft aus dem Reifen (104) ohne Kompressorunterstützung oder über den Kompressor (14) in den Druckluftspeicher (23) einspeisbar ist zum Aufladen des Druckspeichers auf den aus dem Reifen ausgesteuerten Druck oder auf einen vom Kompressor hochkomprimierten vorgebbaren Druck.

2. Reifendruck-Regeleinrichtung nach Anspruch 1, **dadurch gekennzeichnet, dass** zur Erhöhung des Drucks im Reifender Druckluftspeicher (23) über wenigstens ein Wegeventil (26, 28, 44) mit der Reifenanlage (6) ohne Kompressorunterstützung verbindbar ist zur Einspeisung von Druckluft aus dem Druckluftspeicher in den Reifen oder über wenigstens ein Wegeventil (26, 28) mit der Ansaugleitung (15) des Kompressors (14) verbindbar ist, welcher die Druckluft des Druckluftspeichers hochkomprimiert und über wenigstens ein weiteres Wegeventil (44) in die Reifenanlage fördert.

3. Reifendruck-Regelanlage nach Anspruch 1, **dadurch gekennzeichnet, dass** zur Verringerung des Drucks im Reifen (104, 106, 108, 110) die Reifenanlage (6) über wenigstens ein Ventil (44) mit der Ansaugleitung (15) des Kompressors (14) verbindbar ist, welcher Luft aus dem Reifen ansaugt und hochkomprimiert über wenigstens ein weiteres Ventil (26, 28) in den Druckspeicher (23) fördert.

4. Reifendruck-Regeleinrichtung nach Anspruch 1, 2 oder 3, **dadurch gekennzeichnet, dass** in der zum Druckluftspeicher (23) führenden Druckleitung (16) des Kompressors (14) ein erstes 3/2-Wegeventil (26) und zwischen diesem Ventil und dem Druckluftspeicher ein 2/2-Wegeventil (28) und in der zur Reifenanlage (6) führenden Ansaugleitung (15) des Kompressors ein zweites 3/2-Wegeventil (44) angeordnet ist, dessen erster Druckanschluss (441) mit der Ansaugleitung und mit einem Druckanschluss (261) des ersten 3/2-Wegeventils (26) und dessen zweiter Druckanschluss (442) mit der Druckleitung (16) des Kompressors und dessen dritter Druckanschluss (443) mit der Reifenanlage verbunden ist.

5. Reifendruck-Regeleinrichtung nach einem der vorhergehenden Ansprüche, **dadurch gekennzeichnet, dass** druckseitig und saugseitig des Kompressors (14) in Strömungsrichtung automatisch öffnende Rückschlagventile (18, 17) angeordnet sind.

6. Reifendruck-Regeleinrichtung nach Anspruch 4, **dadurch gekennzeichnet, dass** in der zum ersten 3/2-Wegeventil (26) oder zum 2/2-Wegeventil (28) führenden Druckleitung (16) ein Lufttrockner (20) und ein diesem nachgeschaltetes Drosselrückschlagventil (21), das ein Rückschlagventil (22) mit Federgegendruck und eine Drossel (24) aufweist, angeordnet sind, wobei im Lufttrockner-Regenerationsbetrieb Druckluft aus dem Druckluftspeicher (23) über die Drossel in den Lufttrockner strömt.

7. Reifendruck-Regeleinrichtung nach einem der vorhergehenden Ansprüche, **dadurch gekennzeichnet, dass** der Kompressor (14) durch ein Leitung (32) überbrückt ist, die die Druckleitung (16) mit der Ansaugleitung (15) verbindet und in der ein 2/2-Wegeventil (36) und ein Rückschlagventil (38) mit Federgegendruck angeordnet sind, wobei die Ansaugleitung über das Rückschlagventil mit einer Zuleitung (40) verbunden ist, über die Atmosphärenluft ansaugbar ist.

8. Reifendruck-Regeleinrichtung nach einem'der vorhergehenden Ansprüche, **dadurch gekennzeichnet, dass** zum Belüften des Reifens (104, 106, 108, 110) bei Ausfall des Druckluftspeichers (23) der Kompressor (14) über die Ansaugleitung und das Rückschlagventil (38) und die Zuleitung (40) mit der Atmosphäre verbindbar ist und über wenigstens ein Ventil (44) komprimierte Atmosphärenluft in die Reifenanlage (6) fördert.

9. Reifendruck-Regeleinrichtung nach einem der vorhergehenden Ansprüche, **dadurch gekennzeichnet, dass** bei Minderdruck des Druckluftspeichers (23) der Kompressor (14) über die Ansaugleitung und das Rückschlagventil (38) und die Zuleitung (40) mit der Atmosphäre verbindbar ist und über wenigstens ein Ventil (26, 28) komprimierte Atmosphärenluft in den Druckluftspeicher fördert.

10. Reifendruck-Regeleinrichtung nach einem der vorhergehenden Ansprüche, **dadurch gekennzeichnet, dass** zur Druckabsenkung im Reifen bei zu hohem Druck im Speicher (23)(Speicherdruck höher als maximaler erlaubter Druck) der Kompressor (14) saugseitig über wenigstens ein Ventil (44) mit der Reifenanlage (6) und druckseitig über wenigstens ein Ventil (36) mit der Atmosphäre verbindbar ist zur Entlüftung des Reifens mit oder ohne Kompressorunterstützung in die Atmosphäre.

11. Reifendruck-Regeleinrichtung nach Anspruch 10, **dadurch gekennzeichnet, dass** das Ventil (36) das 2/2-Wegeventil in der den Kompressor (14) überbrückenden Leitung (32) ist.

12. Reifendruck-Regeleinrichtung nach einem der vorhergehenden Ansprüche, **dadurch gekennzeichnet, dass** zum Regenerieren des Lufttrockners (20) der Lufttrockner eingangsseitig über die Drossel (24) des Drosselrückschlagventils (21) und wenigstens ein Ventil (26, 28) mit dem Speicher (23) und ausgangsseitig über das Ventil (36) mit der Atmosphäre verbindbar ist.

13. Reifendruck-Regeleinrichtung nach einem der vorhergehenden Ansprüche, **dadurch gekennzeichnet, dass** das Ventil (36) zusätzlich als Überdrucksicherungsventil ausgebildet ist.

14. Reifendruck-Regeleinrichtung nach einem der vorhergehenden Ansprüche, **dadurch gekennzeichnet, dass** Druckund Temperatursensoren (30, 80, 81, 82, 83; 84, 85, 86, 87) zur Überwachung der Luftversorgungseinrichtung (4.1, 4.2, 4.3, 4.4) und der Reifen (104, 106, 108, 110) vorgesehen sind, deren Messsignale der elektronischen Steuereinrichtung (8) zur Auswertung zugeführt werden.
